# FASCICULE DE BREVET EUROPEEN

(11) **EP 2 275 324 B1**
(45) Date de publication et mention de la délivrance du brevet: **23.05.2012**
(21) Numéro de dépôt: 10165525.6
(22) Date de dépôt: 10.06.2010
(51) Int. Cl.: B62D 49/06

(54) **Système de contrepoids pour tracteur, notamment de type agricole**
Ausgleichsgewichtssystem für einen Traktor, insbesondere einen landwirtschftlichen Traktor.
Counterweightsystem for a tractor, in particular an agricultural tractor.

(30) Priorité: 17.07.2009 FR 0954974
(43) Date de publication de la demande: 19.01.2011
(73) Titulaire: Althimasse, 22600 Loudeac (FR)
(72) Inventeur: Thoonsen, Joseph, 22600, Loudeac (FR)
(74) Mandataire: Pontet, Bernard

(56) Documents cités:
- EP-A- 0 083 146
- FR-A- 2 864 818
- US-A- 3 730 545

## Description

L'invention concerne le domaine des masses d'alourdissement destinées à être accrochées à un système de relevage d'un tracteur, notamment de type agricole.

Les tracteurs agricoles répondent de nos jours à des normes et des contraintes les amenant à être de plus en plus légers alors que leur puissance est largement maintenue voire augmentée pour faire face aux nombreux travaux et besoins de l'agriculture. Le document brevet FR2 864 818 décrit bien dans sa partie introductive cette problématique du rapport poids / puissance, qu'il faut compenser à l'aide de contrepoids, à l'avant et/ou à l'arrière du tracteur.

On connaît des systèmes de contrepoids, utilisant par exemple un certain nombre de plaques d'une masse unitaire de 50 kg, accolées les unes aux autres en quantité suffisante, de manière à constituer la masse globale recherchée. Un tel système présente l'inconvénient de demander beaucoup de manipulation, tout en offrant une capacité de charge maximale limitée, de l'ordre de 500 kg sur l'avant du tracteur, en particulier sur route. Hors les charges exigées aujourd'hui se montent aisément à 1400 et 1800 kg respectivement sur l'avant et l'arrière.

Des fabricants proposent donc dans le commerce des systèmes de masses plus faciles à monter et porter sur le tracteur. Ces systèmes utilisent des masses conséquentes, assemblées en un nombre limité, typiquement un ou deux bloc(s). On cite par exemple le système de contrepoids décrit dans le document précité, ou les masses commercialisées sous la marque « Easymass ® ». Ce dernier type de masses offre une souplesse d'utilisation, puisqu'il admet deux configurations d'utilisation, plus ou moins chargées, permettant de s'adapter au besoin. Ce système comprend une masse principale portée par le système de relevage du tracteur, constitué de deux bras de part et d'autre de la masse, pourvus à leur extrémité avant de crochet soutenant la masse via des axes faisant saillie de la masse sur ses faces latérales. Ce dernier système comprend également une masse secondaire qui peut être rapportée au besoin contre la face avant de la masse principale, et maintenue contre celle-ci par un dispositif d'ancrage, de manière à alourdir l'ensemble.

Ce système présente toutefois l'inconvénient d'augmenter significativement le porte-à-faux avant ou arrière du tracteur lorsque la masse secondaire est montée, ce qui ne facilite pas les manoeuvres du tracteur et peut engendrer des difficultés d'équilibrage du véhicule.

Le but de la présente invention est de pallier les inconvénients précédents des systèmes de contrepoids connus, en proposant un système permettant de charger une masse réglable sur le système de relevage du tracteur constituée d'un ou de deux blocs, à l'avant ou à l'arrière, tout en réduisant autant que possible le porte-à-faux avant ou arrière, quelle que soit la masse embarquée.

A cet effet, l'invention a pour objet une masse principale d'alourdissement destinée à être accrochée à un système de relevage d'un tracteur, notamment de type agricole, selon les autres caractéristiques de la revendication indépendante 1.

Ainsi, la masse principale peut occuper plusieurs positions verticales, ce qui permet d'empiler verticalement plusieurs blocs, dont la masse principale et une ou plusieurs masses secondaires situées sous la masse principale. Le porte-à-faux avant n'est pas ou très peu augmenté par rapport à la configuration « masse principale seule ». En outre, comme les masses sont superposées, elles offrent une surface frontale qui peut être dessinée avec continuité entre les différentes parties (absence de rupture), ce qui contribue à une parfaite intégration des masses entre elles et forme un système de contrepoids à l'aspect esthétique.

Selon d'autres caractéristiques avantageuses de l'invention, chacun des axes transversaux est monté rigidement et perpendiculairement sur une platine de fixation apte à être fixée au corps de la masse principale en une position choisie parmi plusieurs positions rotatives prédéterminées autour d'un axe de réglage sensiblement parallèle à l'axe transversal, lesdits axe transversal et axe de réglage étant excentrés l'un par rapport à l'autre.

Selon encore d'autres caractéristiques avantageuses de l'invention, la platine de fixation est fixée au corps de la masse principale par des vis de fixation agencées pour former les quatre sommets d'un quadrilatère, notamment un carré, la platine pouvant ainsi être fixée au corps de la masse dans quatre positions distinctes différentiables par rotation de la platine autour de l'axe de réglage.

Selon encore d'autres caractéristiques avantageuses de l'invention, l'axe de réglage est constitué par un épaulement centré sur l'intersection des lignes, par exemple des diagonales, passant par les vis de fixation, ledit épaulement étant monté rigidement sur la platine, à l'opposé de l'axe transversal, et étant introduit dans un alésage correspondant ménagé dans le corps de la masse principale.

Selon encore d'autres caractéristiques avantageuses de l'invention, la masse principale comprend un dispositif de retenue supérieur formé de deux platines sensiblement parallèle à la direction de progression du tracteur, entre lesquelles un axe de retenue supérieur peut être monté, et relié à un troisième moyen de retenue / levage du tracteur.

Selon encore d'autres caractéristiques avantageuses de l'invention, le dispositif de retenue supérieur comporte un moyen d'accrochage pour un treuillage et/ou un moyen de support d'un drapeau de visibilité.

Selon encore d'autres caractéristiques avantageuses de l'invention, la masse principale comporte un moyen d'accrochage pour un treuillage et/ou un moyen de support d'un drapeau de visibilité situé sur une face avant de la masse.

Selon encore d'autres caractéristiques avantageuses de l'invention, la masse principale comporte dans sa partie inférieure au moins un logement de réception d'une masse secondaire d'alourdissement, apte à être disposée en dessous de la masse principale, le logement étant débouchant sur une face avant de la masse principale, par rapport à la direction de progression du tracteur.

Ainsi, on note que la masse secondaire peut être chargée et accrochée par la masse principale sans même que le conducteur descende de son poste de conduite. La masse secondaire est accrochée par simple avancée du tracteur en direction de la masse secondaire posée au sol, alors que la masse principale est présentée à une hauteur adaptée à l'accrochage des deux masses entre elles.

Selon encore d'autres caractéristiques avantageuses de l'invention, la masse principale comporte deux logements de réception coopérant avec des protubérances correspondantes de la masse secondaire, et assurant avec ces dernières un ancrage par une liaison de type « queue d'aronde », dont la direction longitudinale est sensiblement parallèle à la direction de progression du tracteur.

Selon encore d'autres caractéristiques avantageuses de l'invention, chaque logement comporte une zone arrière dont les dimensions transversales sont plus étroites que dans la zone avant, de manière à former un coin lors de l'introduction de la masse secondaire dans la masse principale par la face avant de cette dernière.

Selon encore d'autres caractéristiques avantageuses de l'invention, la masse principale comporte au moins un feu d'éclairage sur sa face avant, par rapport à la direction de progression du tracteur, ledit feu étant au moins en partie encastré dans le corps de la masse.

Selon encore d'autres caractéristiques avantageuses de l'invention, le dispositif de retenue supérieur supporte au moins un feu d'éclairage et/ou de signalisation, notamment via une rampe transversale à la direction de progression du tracteur, sur laquelle est monté ledit au moins un dispositif d'éclairage et/ou de signalisation.

L'invention a encore pour objet une masse secondaire d'alourdissement adaptée pour être fixée en dessous d'une masse principale ayant tout ou partie des caractéristiques précédentes.

Selon encore d'autres caractéristiques avantageuses de l'invention, la masse secondaire comprend des protubérances coopérant avec ledit au moins un logement de réception de la masse principale.

Selon encore d'autres caractéristiques avantageuses de l'invention, la masse secondaire, dite dans ce cas première masse secondaire comprend au moins un logement de réception d'une autre masse secondaire, destinée à être fixée en dessous de la première masse secondaire.

L'invention a également pour objet un système de contrepoids pour tracteur, notamment de type agricole, comprenant une masse principale d'alourdissement ainsi qu'au moins une masse secondaire d'alourdissement ayant les caractéristiques indiquées précédemment.

L'invention sera mieux comprise à la lecture de la description qui va suivre d'un mode de réalisation non limitatif de l'invention et à la lumière des dessins annexés sur lesquels :
- la figure 1 représente une vue en perspective d'une masse principale d'alourdissement selon l'invention,
- la figure 2 représente une vue en perspective éclatée d'un système de contrepoids pourvu d'une masse principale et d'une masse secondaire d'alourdissement selon l'invention,
- les figures 3 et 4 représentent des masses secondaires selon deux modes de réalisation de l'invention,
- la figure 5 représente un axe de réglage de la hauteur de la masse principale,
- la figure 6 représente un dispositif de retenue supérieur de la masse principale selon l'invention,
- la figure 7 représente un axe transversal d'accrochage de la masse principale des figures 1 et 2 sur une platine de fixation,
- les figures 8 et 9 représentent des vues éclatées de la masse principale et de ses moyens d'accrochage des figures 1 et 2, respectivement de face et de côté,
- la figure 10 représente une vue de dessus de la masse principale et de ses moyens d'accrochage des figures 1 et 2,
- la figure 11 représente une vue en perspective d'un autre mode de réalisation d'une masse principale selon l'invention, dans lequel des feux d'éclairage sont intégrés,
- la figure 12 représente un mode de réalisation d'un moyen d'accrochage pour un treuillage et/ou un moyen de support d'un drapeau sur la face avant de la masse principale selon l'invention, et
- la figure 13 représente un autre mode d'accrochage possible de la masse principale selon l'invention, sur un porte-masse solidaire du tracteur.

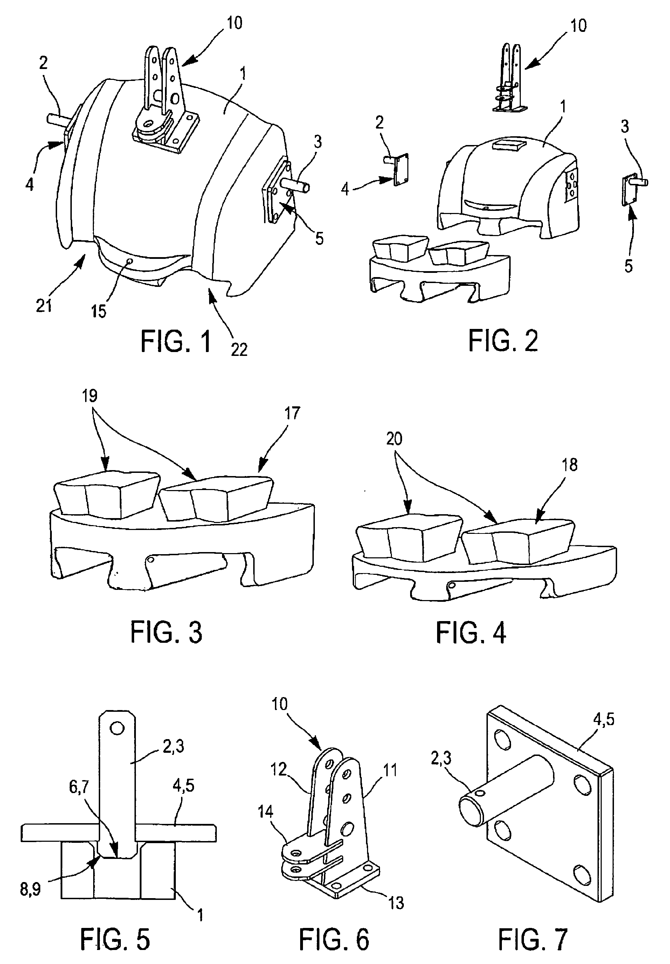

On a représenté à la figure 1 une masse principale 1 d'un système de contrepoids selon l'invention destinée à être montée sur un tracteur, par exemple de type agricole (non représenté). Cette masse est désignée « masse principale » dans la mesure où il est possible de lui adjoindre, à titre facultatif, une masse secondaire comme cela sera décrit ultérieurement.

La masse principale 1 forme un ensemble monobloc destinée à être accrochée à un système de relevage (non représenté) avant ou arrière du tracteur, classiquement constitué de deux bras pourvus à leur extrémité libre d'un crochet en « U » formant un palier pour recevoir des axes transversaux 2, 3 faisant saillie sur les côtés de la masse principale 1. La liaison entre les axes transversaux 2, 3 et les bras est réalisée via des rotules et des moyens de blocages (non représentés) adaptés pour emprisonner les axes 2, 3 et leur rotule respective dans les U. Les axes transversaux 2, 3 sont ainsi dénommés en relation avec la direction de progression du tracteur. De plus dans la suite de la description, on évoquera les notions « avant » ou « arrière » en relation avec une masse située à l'avant du tracteur. On comprend que dans le cas d'une masse située à l'arrière du tracteur, les notions « avant » ou « arrière » sont à inverser pour comprendre l'orientation réelle (l'avant devient l'arrière et vis versa).

Chacun des axes transversaux est monté rigidement et perpendiculairement sur une platine de fixation 4, 5 (figures 1, 2, 7-10), elle-même fixée au corps de la masse principale 1. La platine 4, 5 peut être fixée en une position angulaire choisie parmi plusieurs positions rotatives prédéterminées autour d'un axe de réglage 6, 7. Lorsque les platines 6, 7 sont fixées à la masse 1, les axes transversaux 2, 3 sont dans l'alignement l'un de l'autre, de même que les axes de réglage 6, 7 sont dans l'alignement l'un de l'autre.

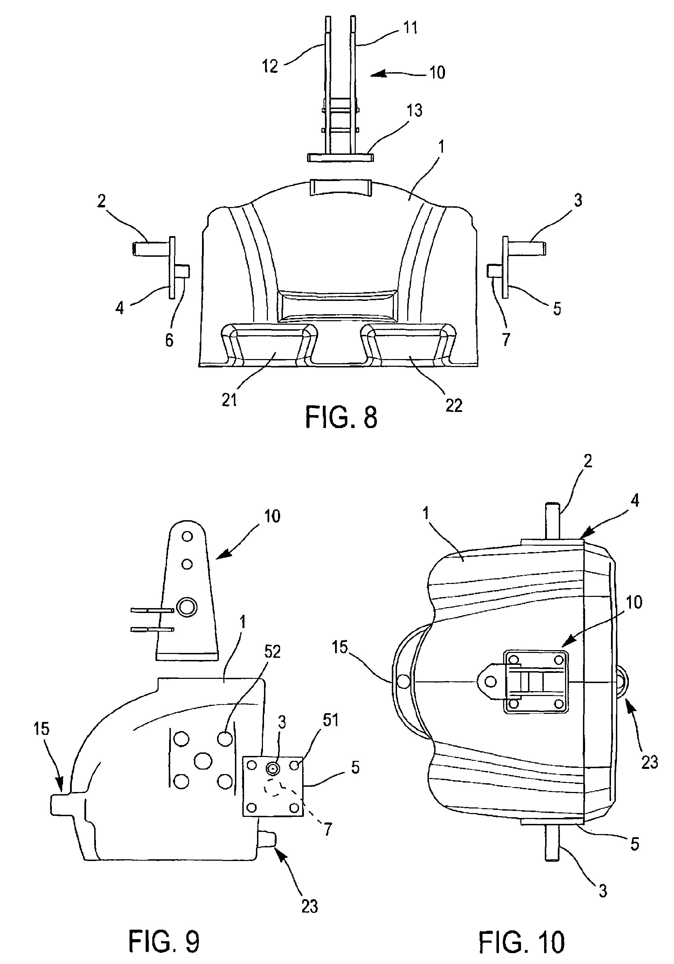

La platine 4, 5 a la forme générale d'un carré dont les angles comportent des orifices 51 pour le passage de quatre vis de fixation pénétrant dans le corps de la masse 1 (figure 9). La position des vis est telle que la platine 4, 5 peut être fixée à la masse principale 1 dans quatre positions possible, qui correspondent aux quatre possibilités d'alignement des orifices 51 de la platine 4, 5 avec les trous 52 de la masse principale 1 recevant ces vis. Comme cela est visible aux figures 7 et 8, les axes transversaux 2, 3 sont excentrés par rapport au centre du carré (ou intersection des diagonales), de sorte que les quatre positions de fixation de la platine 4, 5 à la masse principale 1 permettent plusieurs positions de la masse relativement au tracteur, et notamment plusieurs hauteurs de cette masse (dont au moins une position haute, une position basse et une position intermédiaire). On peut ainsi, en jouant sur la position de la platine 4, 5, régler la garde au sol de la masse principale 1.

Pour assurer une indexation de la platine 4, 5 par rapport à la masse 1, et limiter les efforts de cisaillement s'appliquant sur les vis de fixation, la platine 4, 5 comprend sur sa face opposée à l'axe transversal 2, 3, un axe de réglage 6, 7 formant un épaulement centré sur la forme carrée de la platine. Cet axe de réglage 6, 7 est introduit dans un alésage correspondant 8, 9 formé dans le corps de la masse principale 1 (figures 5 et 9).

On note que la masse principale 1 est accrochée au tracteur par des axes transversaux 2, 3, mais également par un dispositif de retenue supérieur 10, visible notamment aux figures 6 et 8. Ce dispositif empêche également le balancement de la masse 1 autour des axes principaux 2, 3. Ce dispositif de retenue 10 est constitué de deux platines verticales 11, 12 sensiblement parallèle à la direction de progression du tracteur, solidaires d'une même base 13 rapportée vissée sur une zone supérieure de la masse principale 1. Un bras (non représenté) solidaire du tracteur peut être raccordé et maintenu entre ces platines 11, 12 via un système à axe et goupille de verrouillage (non représentés). Ce dispositif de retenue peut également intégrer un moyen d'accrochage avant 14 pour un système de treuillage et/ou un support de drapeau de visibilité (figure 6). Il est en effet commode d'aider le conducteur à situer visuellement la masse principale (non visible directement, car situé très bas à l'avant du tracteur) par l'intermédiaire d'un drapeau. Le moyen d'accrochage avant 14 est constitué d'une chape de fixation coopérant avec une goupille ou un manche de drapeau (non représenté).

Comme cela est visible aux figures 1, 9 et 10, la masse principale 1 peut comporter un autre moyen 15 de fixation d'un drapeau dans une zone frontale (ou avant) de la masse principale 1. Ainsi le drapeau est situé le plus à l'avant possible de la masse principale, ce qui affine la précision de l'aide visuelle.

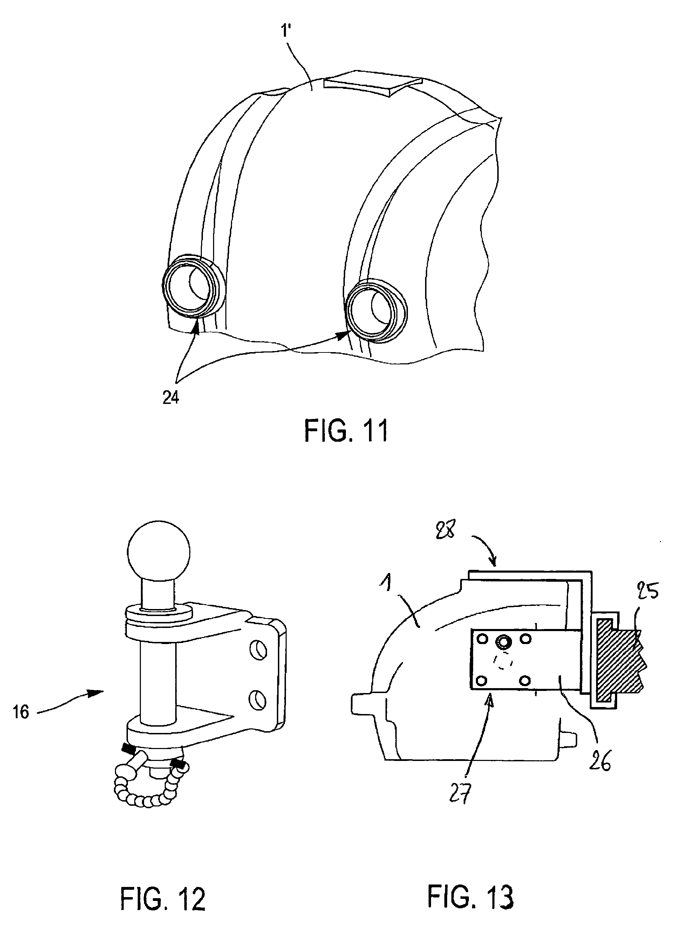

Dans un autre mode de réalisation de l'invention, on peut prévoir de fixer un moyen d'accrochage 16 pour un treuil à la place de ce moyen de support 15, de manière à exercer une traction dans une zone avant et la plus basse possible par rapport à la masse principale 1. Ce moyen d'accrochage peut être constitué d'une chape comme illustré à la figure 12.

Avantageusement, les moyens d'accrochage de la masse principale 1 au tracteur constitués des axes principaux 2, 3, de leur platine 4, 5 et axe de réglage 6, 7 sont réalisés de manière mécano soudée, ce qui confère une excellente dispersion de fabrication, comparé à des systèmes venus de fonderie avec le corps de la masse principale 1. De plus, la résistance mécanique de telle pièce mécano soudée est bien supérieure à celle de la fonte, qui est cassante. Les pièces mécano soudées offrent en prime l'avantage d'une plus grande souplesse d'utilisation (possibilité de remplacement par une autre pièce de forme différente, en cas de casse par exemple ou en cas de géométrie nouvelle à adapter sur la masse).

De la même manière le système de retenue supérieur 10 et le moyen d'accrochage avant 16 sont réalisés de façon mécano soudée avec les mêmes bénéfices.

Selon un aspect avantageux de l'invention, la masse principale 1 peut accueillir dans une zone inférieure une masse secondaire monobloc 17, 18, destinée à alourdir encore le système de contrepoids embarqué sur le tracteur (figures 2 à 4) en fonction du besoin. On comprend que la possibilité de modifier la garde au sol de la masse principale 1 autorise différentes configurations de contrepoids, allant d'une masse unique à deux, voire trois masses superposées les unes sur les autres.

La masse secondaire 17, 18 peut être de poids variable, comme illustré aux figures 3 et 4, qui représente des masses secondaires de grande et petite hauteur.

La masse secondaire comporte dans sa partie supérieure deux protubérances 19, 20 ayant la forme générale de queue d'aronde, la partie évasée étant située en haut. Ces queues d'aronde 19, 20 sont prévues pour être introduites dans des logements 21, 22 de formes correspondantes situés dans la partie inférieure de la masse principale 1. Ces queues d'aronde sont orientées selon la direction de progression du tracteur. Les logements 21, 22 sont débouchants sur la face avant de la masse principale 1 de sorte que les protubérances sont introduites par l'avant de la masse principale 1, puis la masse secondaire 17, 18 est déplacée vers l'arrière. A l'arrière, les logements peuvent être non débouchants comme représentés à la figure 8, ou être débouchants.

Selon un mode de réalisation de l'invention, les protubérances 19, 20 ainsi que les logements 21, 22 ont des formes resserrées vers l'arrière. Les protubérances forment ainsi des coins venant se caler dans les logements, jusqu'à une position de butée.

Dans un autre mode de réalisation non représenté de l'invention, on peut également envisager que les protubérances soient droites (non resserrées à l'arrière) et qu'un système de butée additionnel soit prévu pour bloquer les masses entre elles.

Dans tous les cas, des moyens de verrouillage sont prévus pour empêcher que la masse secondaire 17, 18 ne sorte des logements 21, 22. Ces moyens de verrouillage sont par exemple constitué d'un système à goupille traversant chacune des masses 1, 17, 18 dans une zone 23 (figures 9, 10).

La masse secondaire peut avoir un fond plat, dépourvu de logement. Toutefois, dans une variante de réalisation non représentée de l'invention, la masse secondaire peut elle-même comporter des logements dans une zone inférieure, de manière à pouvoir recevoir et supporter une autre masse secondaire.

Selon encore un autre mode de réalisation de l'invention, illustré à la figure 11, la masse principale 1' peut comprendre des feux d'éclairage 24 ou de signalisation parfaitement intégrés aux corps de la masse 1'. On a représenté un exemple de réalisation avec deux feux 24, étant entendu qu'on peut en variante ne prévoir qu'un unique feu ou plus de deux. Pour la simplicité de l'illustration, nous n'avons pas représenté à la figure 11 les logements de réception de la masse secondaire, ni les axes transversaux coopérant avec le système de relevage du tracteur.

Dans une autre variante de réalisation non représentée, le dispositif de retenue supérieur peut également servir de support à une rampe de fixation d'un ou plusieurs feux d'éclairage et/ou de signalisation. La rampe est disposée transversalement à la direction de progression du tracteur et supporte par exemple un feu à chacune de ses extrémités.

Dans la description qui précède, les masses sont en fonte, obtenues classiquement par moulage. Les poids des masses peuvent être par exemple :
- 900 Kg pour la masse principale
- 300 ou 500 Kg pour la masse secondaire

Bien entendu, l'invention n'est pas limitée aux moyens qui viennent d'être décrits et comprend tous les équivalents techniques.

Dans une variante, on peut prévoir que les axes de réglage soient purement virtuels pour la fixation de la platine sur la masse principale 1. Dans ce cas, les efforts mécaniques sont directement supportés par les vis de fixation.

Dans une autre variante également, on peut prévoir que la masse secondaire ne comporte qu'une unique protubérance centrale venant se loger dans un logement d'accueil unique de la masse principale.

On note également que la masse principale peut être montée sur un porte-masse 25 classique tel qu'illustré à la figure 13. Un tel porte-masse 25 est fixé rigidement à la structure du tracteur et constitue une alternative au système de relevage du tracteur évoqué précédemment. Dans ce cas, un ensemble de fixation mécano soudé 26 est fixé d'une part aux faces latérales, et d'autre part à une zone supérieure de la masse principale. Les zones de fixations correspondent à celles des platines 4, 5 et du dispositif de retenue supérieur 10 qui sont supprimés dans ce cas. En revanche, l'ensemble mécano soudé 26 comporte ses propres platines latérales 27 ainsi qu'une platine supérieure 28, coopérants avec les faces de fixation latérales et supérieure de la masse principale. Les fixations sont réalisées par des vis. Dans cette configuration, aucune possibilité de réglage de la position verticale de la masse principale n'est offerte. Il est simplement indiqué ici que le dispositif selon l'invention est également compatible avec cet autre mode d'accrochage que constitue le porte-masse.

## Revendications

1. Masse principale d'alourdissement (1, 1') destinée à être accrochée à un système de relevage ou à un porte-masse d'un tracteur, notamment de type agricole, **caractérisé en ce qu'**elle comporte dans sa partie inférieure au moins un logement de réception (21 ; 22) d'une masse secondaire d'alourdissement (17 ; 18), apte à être disposée en dessous de la masse principale (1), ledit logement (21, 22) de réception coopérant avec une protubérance correspondante de la masse secondaire (17 ; 18), assurant avec cette dernière un ancrage, tel qu'une liaison de type « queue d'aronde » dont la direction longitudinale est sensiblement parallèle à la direction de progression du tracteur.

2. Masse principale (1, 1') selon la revendication 1, **caractérisé en ce qu'**elle est accrochée au système de relevage ou au porte-masse du tracteur au moyen de deux axes transversaux (2 ; 3) à la direction de progression du tracteur, disposés dans l'alignement l'un (2) de l'autre (3) et faisant saillie sur les faces latérales de la masse (1 ; 1'), la masse principale (1, 1') comprenant des moyens de réglage (2-7) de la position verticale des axes transversaux (2 ; 3), adaptés pour modifier la garde au sol de la masse principale d'alourdissement (1 ; 1') lorsqu'elle est accrochée au système de relevage ou au porte-masse.

3. Masse principale (1 ; 1') selon la revendication 1 ou 2, **caractérisé en ce que** chacun des axes transversaux (2 ; 3) est monté rigidement et perpendiculairement sur une platine de fixation (4 ; 5) apte à être fixée au corps de la masse principale (1 ; 1') en une position choisie parmi plusieurs positions rotatives prédéterminées autour d'un axe de réglage (6 ; 7) sensiblement parallèle à l'axe transversal (2 ; 3), lesdits axe transversal (2 ; 3) et axe de réglage (6 ; 7) étant excentrés l'un par rapport à l'autre.

4. Masse principale (1 ; 1') selon la revendication 3, **caractérisé en ce que** la platine de fixation (4 ; 5) est fixée au corps de la masse principale (1 ; 1') par des vis de fixation agencées pour former les quatre sommets d'un quadrilatère, notamment un carré, la platine (4 ; 5) pouvant ainsi être fixée au corps de la masse (1 ; 1') dans quatre positions distinctes différentiables par rotation de la platine (4 ; 5) autour de l'axe de réglage (6 ; 7).

5. Masse principale (1 ; 1') selon la revendication 3 ou 4, **caractérisé en ce que** l'axe de réglage (6 ; 7) est constitué par un épaulement centré sur l'intersection des lignes, par exemple des diagonales, passant par les vis de fixation, ledit épaulement étant monté rigidement sur la platine (4 ; 5), à l'opposé de l'axe transversal (2 ; 3), et étant introduit dans un alésage (8 ; 9) correspondant ménagé dans le corps de la masse principale (1 ; 1').

6. Masse principale (1 ; 1') selon l'une quelconque des revendications 1 à 5, **caractérisé en ce qu'**elle comprend un dispositif de retenue supérieur (10) formé de deux platines (11 ; 12) sensiblement parallèle à la direction de progression du tracteur, entre lesquelles un axe de retenue supérieur peut être monté, et relié à un troisième moyen de retenue / levage du tracteur.

7. Masse principale (1 ; 1') selon la revendication 6, **caractérisé en ce que** le dispositif de retenue supérieur (10) comporte un moyen d'accrochage pour un treuillage et/ou un moyen de support d'un drapeau de visibilité.

8. Masse principale (1 ; 1') selon l'une quelconque des revendications 1 à 7, **caractérisé en ce qu'**elle comporte un moyen d'accrochage (15 ; 16) pour un treuillage et/ou un moyen de support d'un drapeau de visibilité situé sur une face avant de la masse (1 ; 1').

9. Masse principale (1 ; 1') selon l'une quelconque des revendications 1 à 8 **caractérisé en ce que** le logement (21 ; 22) débouche sur une face avant de la masse principale (1 ; 1'), par rapport à la direction de progression du tracteur.

10. Masse principale (1 ; 1') selon la revendication 9, **caractérisé en ce qu'**elle comporte deux logements (21, 22) de réception coopérant avec des protubérances correspondantes de la masse secondaire (17 ; 18).

11. Masse principale (1 ; 1') selon la revendication 9 ou 10, **caractérisé en ce que** chaque logement (21 ; 22) comporte une zone arrière dont les dimensions transversales sont plus étroites que dans la zone avant, de manière à former un coin lors de l'introduction de la masse secondaire (17 ; 18) dans la masse principale (1) par la face avant de cette dernière.

12. Masse principale (1 ; 1') selon l'une quelconque des revendications 1 à 11, **caractérisé en ce qu'**elle comporte au moins un feu d'éclairage (24) sur sa face avant, par rapport à la direction de progression du tracteur, ledit feux étant au moins en partie encastré dans le corps de la masse.

13. Masse principale (1 ; 1') selon l'une quelconque des revendications 6 à 12, **caractérisé en ce que** le dispositif de retenue supérieur supporte au moins un feu d'éclairage et/ou de signalisation, notamment via une rampe transversale à la direction de progression du tracteur, sur laquelle est monté ledit au moins un dispositif d'éclairage et/ou de signalisation.

14. Masse secondaire d'alourdissement (17 ; 18), **caractérisé en ce qu'**elle est adaptée pour être fixée en dessous d'une masse principale (1 ; 1') selon l'une quelconque des revendications 1 à 12, la masse secondaire (17 ; 18) comprenant dans sa partie supérieure au moins une protubérance (19 ; 20) coopérant avec ledit au moins un logement (21 ; 22) de réception de la masse principale (1 ; 1').

15. Masse secondaire (17 ; 18) selon la revendication 14, **caractérisé en ce qu'**elle comprend au moins un logement de réception d'une autre masse secondaire, destinée à être fixée en dessous de la première (17 ; 18).

16. Système de contrepoids pour tracteur, notamment de type agricole, **caractérisé en ce qu'**il comprend une masse principale d'alourdissement selon l'une quelconque des revendications 1 à 13, ainsi qu'au moins une masse secondaire d'alourdissement selon la revendication 14.

## Claims

1. A primary ballast weight (1, 1') for being fastened to a lifting system or to a weight carrier of a tractor, in particular of the agricultural type, **characterised in that** it includes in its lower part at least one housing (21; 22) for receiving a secondary ballast weight (17; 18), which can be provided under the primary weight (1), said receiving housing (21, 22) cooperating with a corresponding protrusion of the secondary weight (17; 18), providing an anchorage with the latter, such as a "dovetail" type connection the longitudinal direction of which is substantially parallel to the advancing direction of the tractor.

2. The primary weight (1, 1') according to claim 1, **characterised in that** it is fastened to the lifting system or to the weight carrier of the tractor by means of two pins (2; 3) transverse to the advancing direction of the tractor, provided aligned one (2) with the other (3) and projecting on the side faces of the weight (1; 1'), the primary weight (1, 1') comprising means (2-7) for setting the vertical position of the transverse pins (2; 3), adapted to change the ground clearance of the primary ballast weight (1; 1') when it is fastened to the lifting system or weight carrier.

3. The primary weight (1; 1') according to claim 1 or 2, **characterised in that** each of the transverse pins (2; 3) is mounted rigidly and perpendicularly to an attaching plate (4; 5) which can be attached to the body of the primary weight (1; 1') in a position selected from several predetermined rotational positions about a setting pin (6; 7) substantially parallel to the transverse pin (2; 3), said transverse pin (2; 3) and setting pin (6; 7) being off centre from each other.

4. The primary weight (1; 1') according to claim 3, **characterised in that** the attaching plate (4; 5) is attached to the body of the primary weight (1; 1') through attaching screws arranged to form the four vertices of a quadrilateral, in particular a square, whereby the plate (4; 5) can thus be attached to the body of the weight (1; 1') in four distinct positions which are differentiable by rotation of the plate (4; 5) about the setting pin (6; 7).

5. The primary weight (1; 1') according to claim 3 or 4, **characterised in that** the setting pin (6; 7) consists of a shoulder centred on the intersection of lines, for example diagonals, passing through the attaching screws, said shoulder being rigidly mounted on the plate (4; 5), opposite to the transverse pin (2; 3), and being introduced in a corresponding bore (8; 9) provided in the body of the primary weight (1; 1').

6. The primary weight (1; 1') according to any of claims 1 to 5, **characterised in that** it comprises an upper retaining device (10) formed with tao plates (11; 12) which is substantially parallel to the advancing direction of the tractor, between which an upper retaining pin can be mounted, and connected to a third retaining/lifting means of the tractor.

7. The primary weight (1; 1') according to claim 6, **characterised in that** the upper retaining device (10) includes a means for fastening a winching and/or a visibility flag supporting means.

8. The primary weight (1; 1') according to any of claims 1 to 7, **characterised in that** it includes a means (15; 16) for fastening a winching and/or a visibility flag supporting means located on a front face of the weight ( 1; 1').

9. The primary weight (1; 1') according to any of claims 1 to 8, **characterised in that** the housing (21; 22) opens on a front face of the primary weight (1; 1'), with respect to the advancing direction of the tractor.

10. The primary weight (1; 1') according to claim 9, **characterised in that** it includes two receiving housings (21; 22) cooperating with corresponding protrusions of the secondary weight (17; 18).

11. The primary weight (1; 1') according to claim 9 or 10, **characterised in that** each housing (21; 22) includes a back area the transverse dimensions of which are narrower than in the front area, so as to form a wedge upon introducing the secondary weight (17; 18) into the primary weight (1) through the front face of the latter.

12. The primary weight (1; 1') according to any of claims 1 to 11, **characterised in that** it includes at least one lighting lamp (24) on its front face, with respect to the advancing direction of the tractor, said lamp being at least partly embedded in the body of the weight.

13. The primary weight (1; 1') according to any of claims 6 to 12, **characterised in that** the upper retaining device supports at least one lighting and/or signalling lamp, in particular via a ramp transverse to the advancing direction of the tractor, on which said at least one lighting and/or signalling device is mounted.

14. A secondary ballast weight (17; 18), **characterised in that** it is adapted to be attached under a primary weight (1; 1') according to any of claims 1 to 12, the secondary weight (17; 18) comprising in its upper part at least one protrusion (19; 20) cooperating with said at least one housing (21; 22) for receiving the primary weight ( 1; 1').

15. The secondary weight (17; 18) according to claim 14, **characterised in that** it includes at least one housing for receiving another secondary weight, for being fastened under the first one (17; 18).

16. A counter-weight system for a tractor, in particular of the agricultural type, **characterised in that** it comprises a primary ballast weight according to any of claims 1 to 13, as well as at least one secondary ballast weight according to claim 14.

## Patentansprüche

1. Hauptballastgewicht (1, 1), das dazu bestimmt ist, an eine Hebeeinrichtung bzw. einen Gewichtsträger eines Traktors insbesondere landwirtschaftlicher Art angehängt zu werden, **dadurch gekennzeichnet, dass** es in seinem unteren Abschnitt zumindest einen Aufnahmeraum (21; 22) zum Aufnehmen eines Nebenballastgewichts (17; 18) aufweist, das dazu geeignet ist, unterhalb des Hauptgewichts (1) angeordnet zu werden, wobei der Aufnahmeraum (21, 22) mit einem entsprechenden Vorsprung des Nebengewichts (17; 18) zusammenwirkt und mit diesem eine Verankerung gewährleistet, wie etwa eine schwalbenschwanzartige Verbindung, deren Längsrichtung im wesentlichen parallel zur Fahrtrichtung des Traktors verläuft.

2. Hauptgewicht (1, 1') nach Anspruch 1, **dadurch gekennzeichnet, dass** es an die Hebeeinrichtung bzw. an den Gewichtsträger des Traktors mittels zweier Querachsen (2; 3) angehängt wird, die quer zur Fahrtrichtung des Traktors verlaufen, wovon die eine (2) in Flucht zur anderen (3) angeordnet ist, und die über die Seitenflächen des Gewichts (1; 1') vorspringen, wobei das Hauptgewicht (1, 1') Einstellmittel (2 - 7) zum Einstellen der Höhenstellung der Querachsen (2; 3) aufweist, die dazu geeignet sind, die Bodenfreiheit des Hauptballastgewichts (1; 1') zu verändern, wenn es an die Hebeeinrichtung bzw. an den Gewichtsträger angehängt wird.

3. Hauptgewicht (1; 1') nach Anspruch 1 oder 2, **dadurch gekennzeichnet, dass** jede der Querachsen (2; 3) starr und senkrecht zu einer Befestigungsplatte (4 ; 5) an dieser gelagert ist, die dazu geeignet ist, am Körper des Hauptgewichts (1; 1') in einer Stellung befestigt zu werden, die aus mehreren vorbestimmten Drehstellungen um eine Einstellachse (6; 7) herum ausgewählt ist, die im wesentlichen parallel zur Querachse (2; 3) verläuft, wobei die Querachse (2; 3) und die Einstellachse (6; 7) exzentrisch zueinander angeordnet sind.

4. Hauptgewicht (1; 1') nach Anspruch 3, **dadurch gekennzeichnet, dass** die Befestigungsplatte (4; 5) über Befestigungsschrauben an den Körper des Hauptgewichts (1; 1') befestigt ist, welche dazu vorgesehen sind, die vier Ecken eines Vierecks, insbesondere eines Quadrats, zu bilden, wobei die Platte (4, 5) **dadurch** an den Körper des Gewichts (1; 1') in vier unterschiedlichen Stellungen befestigt werden kann, die durch Drehung der Platte (4; 5) um die Einstellachse (6; 7) herum unterschieden werden können.

5. Hauptgewicht (1; 1') nach Anspruch 3 oder 4, **dadurch gekennzeichnet, dass** die Einstellachse (6; 7) aus einer Schulter besteht, die auf den Schnittpunkt der Linien, beispielsweise der Diagonalen, zentriert ist, die durch die Befestigungsschrauben gehen, wobei die Schulter starr an der Platte (4; 5) entgegengesetzt zur Querachse (2; 3) montiert ist und in eine entsprechende Bohrung (8; 9) eingeführt ist, die im Körper des Hauptgewichts (1; 1') ausgeführt ist.

6. Hauptgewicht (1; 1') nach einem der Ansprüche 1 bis 5, **dadurch gekennzeichnet, dass** es eine obere Haltevorrichtung (10) aufweist, die aus zwei Platten (11; 12) besteht, die im wesentlichen parallel zur Fahrtrichtung des Traktors verlaufen und zwischen welchen eine obere Halteachse gelagert werden kann, und die mit einem dritten Halte-/Hebemittel des Traktors verbunden werden kann.

7. Hauptgewicht (1; 1') nach Anspruch 6, **dadurch gekennzeichnet, dass** die obere Haltevorrichtung (10) ein Einhängemittel für eine Winde und/oder ein Tragemittel zum Tragen einer Sichtfahne aufweist.

8. Hauptgewicht (1; 1') nach einem der Ansprüche 1 bis 7, **dadurch gekennzeichnet, dass** es ein Einhängemittel (15; 16) für eine Winde und/oder ein Tragemittel zum Tragen einer Sichtfahne aufweist, das sich an einer Vorderseite des Gewichts (1; 1') befindet.

9. Hauptgewicht (1; 1') nach einem der Ansprüche 1 bis 8, **dadurch gekennzeichnet, dass** der Aufnahmeraum (21; 22) an einer bezüglich der Fahrtrichtung des Traktors vorderen Seite des Hauptgewichts (1; 1') ausmündet.

10. Hauptgewicht (1; 1') nach Anspruch 9, **dadurch gekennzeichnet, dass** es zwei Aufnahmeräume (21, 22) aufweist, die mit entsprechenden Vorsprüngen des Nebengewichts (17; 18) zusammenwirken.

11. Hauptgewicht (1; 1') nach Anspruch 9 oder 10, **dadurch gekennzeichnet, dass** jeder Aufnahmeraum (21; 22) einen hinteren Bereich aufweist, dessen Querabmessungen schmäler sind als in dem vorderen Bereich, so dass beim Einführen des Nebengewichts (17; 18) in das Hauptgewicht (1) über die Vorderseite desselben ein Zwickel gebildet wird.

12. Hauptgewicht (1; 1') nach einem der Ansprüche 1 bis 11, **dadurch gekennzeichnet, dass** es zumindest einen Scheinwerfer (24) an seiner bezüglich der Fahrtrichtung des Traktors vorderen Seite aufweist, wobei der Scheinwerfer zumindest teilweise im Körper des Gewichts versenkt ist.

13. Hauptgewicht (1; 1') nach einem der Ansprüche 6 bis 12, **dadurch gekennzeichnet, dass** die obere Haltevorrichtung zumindest einen Scheinwerfer und/oder eine Signalleuchte trägt, insbesondere über eine quer zur Fahrtrichtung des Traktors verlaufende Rampe, an welcher die zumindest eine Leucht- und/oder Signalvorrichtung montiert ist.

14. Nebenballastgewicht (17; 18), **dadurch gekennzeichnet, dass** es dazu geeignet ist, unterhalb eines Hauptgewichts (1; 1') nach einem der Ansprüche 1 bis 12 befestigt zu werden, wobei das Nebengewicht (17; 18) in seinem oberen Bereich zumindest einen Vorsprung (19; 20) aufweist, der mit dem zumindest einen Aufnahmeraum (21; 22) des Hauptgewichts (1; 1') zusammenwirkt.

15. Nebengewicht (17; 18) nach Anspruch 14, **dadurch gekennzeichnet, dass** es zumindest einen Aufnahmeraum zum Aufnehmen eines weiteren Nebengewichts aufweist, das dazu bestimmt ist, unterhalb des ersten (17; 18) befestigt zu werden.

16. Ausgleichsgewichteinrichtung für Traktoren insbesondere landwirtschaftlicher Art, **dadurch gekennzeichnet, dass** sie ein Hauptballastgewicht nach einem der Ansprüche 1 bis 13 sowie zumindest ein Nebenballastgewicht nach Anspruch 14 aufweist.
